# EUROPÄISCHE PATENTSCHRIFT

(11) **EP 1 031 014 B1**
(45) Veröffentlichungstag und Bekanntmachung des Hinweises auf die Patenterteilung: **03.11.2004**
(21) Anmeldenummer: 98959870.1
(22) Anmeldetag: 11.11.1998
(51) Int. Cl.: G01G 11/08

(54) **VERFAHREN UND VORRICHTUNG ZUR KONTINUIERLICHEN DOSIERUNG**
METHOD AND DEVICE FOR CONTINUOUS DOSING
DISPOSITIF ET PROCEDE DE DOSAGE CONTINU

(30) Priorität: 11.11.1997 DE 19749873
(43) Veröffentlichungstag der Anmeldung: 30.08.2000
(73) Patentinhaber: Pfister GmbH, 86165 Augsburg (DE)
(72) Erfinder: HÄFNER, Hans, Wilhelm, D-86551 Aichach-Walchshofen (DE)
(74) Vertreter: Fiener, Josef
(86) Internationale Anmeldenummer: PCT/EP1998/007185
(87) Internationale Veröffentlichungsnummer: WO 1999/024795

(56) Entgegenhaltungen:
- EP-A- 0 615 113
- DE-A- 3 626 696
- DE-A- 4 443 053

## Beschreibung

Die Erfindung betrifft ein Verfahren und eine Vorrichtung zur kontinuierlichen Dosierung von Schüttgütern aus einem Behälter mit einer Zellenradschleuse und einer der Zellenradschleuse nachgeschalteten Dosiereinrichtung.

Eine derartige Anlage zum kontinuierlichen Fördern von Schüttgütern ist aus der DE 40 23 948 A1 bekannt, wobei eine Dosierrotorwaage gemäß der DE 32 17 406 A1 bzw. der EP-A-0 198 956 Verwendung findet. Diese Dosiervorrichtung nach einer Schüttgutzuführung ist in einem geschlossenen pneumatischen Förderweg einer Sammelvorrichtung mit einer Zellenradschleuse nachgeschaltet. Hierdurch läßt sich die darin befindliche Schüttgutmasse kontinuierlich feststellen und entweder die Drehzahl der Zellenradschleuse oder die Gesamtluftstrommenge des Fördergebläses beeinflussen, so daß der Schüttgutdurchsatz durch Variieren der zugeführten Luftmenge pro Zeiteinheit beeinflußt werden kann.

Zur entsprechenden Regelung des gewünschten Mischungsverhältnisses oder der gewünschten Fördermenge pro Zeiteinheit (Förderstärke) wird hierbei ein rechnergesteuertes, zentrales Dosiersteuersystem verwendet, wie es beispielsweise in der DE 32 17 406 A1 beschrieben ist, wobei ein Wägesignal der Bunker-Wägezellen der Sammelvorrichtung als Eingangssignal dient und die Drehzahl des Dosierrotors und gegebenenfalls der Zellenradschleuse für die Schüttgutzufuhr geregelt wird.

Dieses Regelungssystem wird auch in der vorstehend genannten EP-A-0 198 956 näher beschrieben, wobei in der Dosierrotorwaage die momentan in der Rotorwägestrecke wirkende Schüttgutmasse erfaßt wird, aus der sich durch Multiplikation mit der Winkelgeschwindigkeit des Dosierrotors der Schüttgut-Massendurchsatz ergibt. Die Wägeelektronik speichert hierbei die momentan auf der Rotorwägestrecke (Meßstrecke) befindliche Schüttgutmasse, so daß kurz vor dem Austrag des Schüttgutes in die pneumatische Förderleitung entsprechend der vorbestimmten Soll-Förderstärke die Rotorwinkelgeschwindigkeit variiert werden kann. Hierdurch ergibt sich eine relativ hohe Dosiergenauigkeit, die sich für die Dosierung von staubförmigen Schüttgütern, beispielsweise bei der Kohlenstaübdosierung von Zementdrehrohröfen oder zur Dosierung von Gips oder Additiven bei der Rauchgasreinigung sehr gut eignet.

Bei bestimmten Fördergütern ist jedoch zu beachten, daß diese Schüttgüter abhängig vom Feuchtegrad, Fluidisierung, Feinheit usw. zur Brückenbildung neigen können, so daß es beim Schüttgutaustrag zu zufälligen oder stark pulsierenden Massestromschwankungen kommen kann. Diese kurzzeitigen Massestromschwankungen können durch erhöhten Förderdruck teilweise ausgeglichen werden, insbesondere auch bei größeren Förderstrecken. Hierbei tritt jedoch zum Behälter hin eine größere Leckluftströmung auf, die zu Störungen in der Schüttgutzufuhr und der Förderleistung führen kann. Teilweise werden deshalb sogar bei derartigen Anlagen zum Fördern von Schüttgütern aufwendige Leckgasabführungen erforderlich, wodurch sich jedoch der Bauaufwand erheblich erhöht.

Demzufolge liegt der Erfindung die Aufgabe zugrunde, ein Verfahren und eine Vorrichtung zur kontinuierlichen Dosierung von Schüttgütern zu schaffen, mit dem bzw. mit der auf einfache Weise eine verbesserte Dichtigkeit und große Förderleistung erreicht wird.

Diese Aufgabe wird gelöst durch ein Verfahren gemäß den Merkmalen des Patentanspruches 1 bzw. durch eine Vorrichtung gemäß den Merkmalen des Patentanspruches 5.

Durch die Regelung der nachgeschalteten Dosiereinrichtung relativ zur Förderstärke der vorgeschalteten Zellenradschleuse bzw. umgekehrt ergibt sich durch die partielle Rückförderung in der Zellenradschleuse eine verbesserte Eigen-Abdichtung durch das in den rücklaufenden Zellen hochgeförderte Schüttgut und damit eine wesentliche Reduzierung der Leckgasströmung in der Dosieranlage, so daß eine hohe Dosier- bzw. Förderleistung erreicht wird. Dies ist insbesondere bei der Kohlenstaubdosierung mit großen Förderlängen und Förderdrücken von Bedeutung.

Bevorzugte Ausführungsformen sind Gegenstand der abhängigen Ansprüche.

Nachfolgend werden zwei Ausführungsbeispiele anhand der Zeichnungen näher erläutert und beschrieben. Hierbei zeigen:
- Fig. 1.: eine Längsschnittdarstellung durch eine Vorrichtung zur kontinuierlichen Schüttgutdosierung mit zwei Zellenradschleusen; und
- Fig. 2: eine abgewandelte Ausführungsform der Vorrichtung gemäß Fig. 1, wobei zur Dosierung eine Dosierrotorwaage verwendet wird.

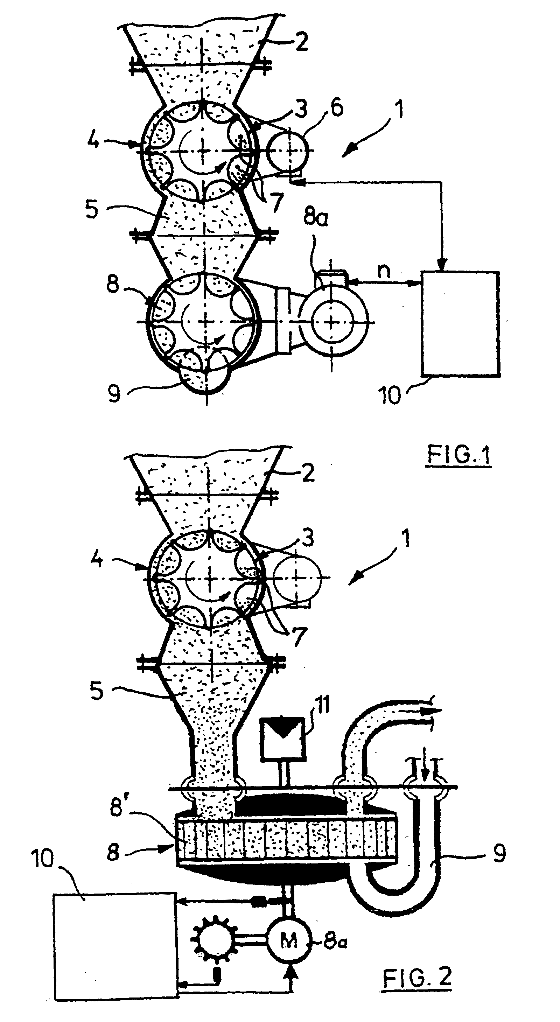

In Fig. 1 ist eine Vorrichtung 1 zur kontinuierlichen Dosierung dargestellt, wobei das entsprechend einer einstellbaren Soll-Förderstärke zu dosierende Fördergut, insbesondere ein rieselfähiges Schüttgut, aus einem Silo oder Behälter 2 mittels einer als Zellenradschleuse 4 ausgebildeten Abzugsvorrichtung 3 gefördert wird. Das Fördergut gelangt hierbei in die Zellenradschleuse 4 und dann in einen Zwischenbehälter 5. Die Zellenradschleuse 4 ist hierbei bevorzugt als Dichtschleuse ausgebildet, die aus dem stets vollständig mit Schüttgut gefüllten Zwischenbehälter 5 Schüttgut wiederum nach oben herausführt und in den hier rechten, rückfördernden Zellen 7 zum Behälter 2 zurückfördert, wie dies punktiert dargestellt ist. Die Zellenradschleuse 4 ist dabei durch einen Elektromotor 6 angetrieben, der zur Drehzahleinstellung mit einer Dosiersteuerung 10 verbunden ist. Die zur "Überschußförderung" erforderliche Drehzahl des Zellenrades der Zellenradschleuse 4 liegt hierbei (bei ansonsten gleichen Abmessungen) immer geringfügig höher als die Drehzahl der unteren Zellenradschleuse, die als Dosiervorrichtung dient.

Zur Erfassung des Massenstroms der Zellenradschleuse 4 kann jedoch auch die Drehzahl direkt an der Antriebswelle oder die Leistungsaufnahme des Antriebsmotors 6 herangezogen werden. Die hier dargestellte Zellenradschleuse 4 mit Horizontalachse hat hierbei den Vorteil einer relativ hohen Dosiergenauigkeit, so daß diese Form des Zellenradschleuse 4 bevorzugt ist. Es können jedoch auch Zellenradschleusen mit Vertikalachse Verwendung finden.

Am unteren Ende des Zwischenbehälters 5 ist eine Dosiereinrichtung 8 wiederum in Form einer Zellenradschleuse vorgesehen, die von einem Motor 8a mit regelbarer Drehzahl angetrieben ist und in eine Ausblasleitung 9 mündet. Wesentlich ist hierbei, daß der Meßwertaufnehmer der Zellenradschleuse 4, also z. B. ein Drehzahlgeber oder Tachogenerator am Motor 6 mit der Dosiersteuerung 10 verbunden ist, die somit den momentanen Massenstrom der Zellenradschleuse 4 feststellt und in Beziehung zur Förderstärke der Dosiereinrichtung 8 setzt, um deren Drehzahl bzw. Winkelgeschwindigkeit zur Förderstärke der Zellenradschleuse 4 im Sinne einer Überschußförderung abzustimmen bzw. zu variieren. Liegt somit an der Zellenradschleuse 4 eine Abweichung des Massenstroms vor, so wird zur Konstanterhaltung der Schütthöhe im Zwischenbehälter 5 die Winkelgeschwindigkeit der Dosiereinrichtung 8 um den entsprechenden Wert reduziert bzw. die Drehzahl der Zellenradschleuse 4 erhöht.

Von wesentlicher Bedeutung ist hierbei, daß durch die stetige Füllung des Zwischenbehälters 5 von der Zellenradschleuse 4 das Schüttgut zum Behälter 2 hin abschöpft und damit die zumindest partiell gefüllten, rückfördernden Zellen 7 die Dichtheit gegenüber Leckgasströmen wesentlich erhöht. Von der Dosiersteuerung 10 kann somit berechnet werden, welche Förderstärke bzw. Drehzahl der Zellenradschleuse 4 zur Aufrechterhaltung der Füllhöhe und damit der Rückförderung von ca. 30% des Schüttgutes erforderlich ist. Abhängig von der ebenfalls gemessenen Winkelgeschwindigkeit der Dosiereinrichtung 8 (z. B. einen Tachogenerator am Motor 8a) läßt sich somit unter Berücksichtigung der Füllhöhe unter der Zellenradschleuse 4 die entsprechende Förderstärke der über der Dosiereinrichtung 8 angeordneten Zellenradschleuse 4 einstellen bzw. regeln. somit kann die Dosiersteuerung 10 zu allen Zeitpunkten unter Berücksichtigung der Austragsleistung der Dosiereinrichtung 8 die Drehzahl der Zellenradschleuse 4 einregulieren, so daß durch die hier rechts nach oben laufenden, rückfördernden Zellen 7 eine kontinuierliche, bewußte Rückförderung zum Behälter 2 hin und damit eine verbesserte Dichtheit der Zellenradschleuse 4 gegen Leckgasverluste möglich ist.

In Fig. 2 ist eine abgewandelte Ausführung der Vorrichtung 1 gemäß Fig. 1 dargestellt, wobei unterhalb der Zellenradschleuse 4 als Dosiereinrichtung 8 eine Dosierrotorwaage 8' (insbesondere gemäß dem eingangs genannten Stand der Technik) mit einer Ausblasleitung 9 und einer Wägezelle 11 angeordnet ist. Es sei darauf hingewiesen, daß anstatt der in Fig. 1 dargestellten unteren Zellenradschleuse als Dosiereinrichtung 8 auch eine Horizontalschleuse (mit Vertikalachse) ähnlich dem Dosierrotor 8' in Fig. 2 Verwendung finden kann. In vorteilhafter Ausgestaltung kann hierbei zur weitgehenden Konstanthaltung der Füllhöhe unterhalb der Zellenradschleuse 4 deren Massenstrom auf ca. 120 -130% der Dosiervorrichtung 8 gesteuert oder geregelt sein, so daß eine Rückförderquote von 20 -30% in der Zellenradschleuse 4 vorliegt. In besonders einfacher Ausführung genügt es, einen Antrieb von dem Motor 8a und einem zugeordneten Getriebe der Dosiereinrichtung 8 abzuzweigen, um hier eine synchrone Regelung der oberen und unteren Zellenradschleuse bzw. des Dosierrotors zu erreichen. Ebenso können natürlich getrennte Motoren 6 und 8a vorgesehen sein, die von der Dosiersteuerung 10 in elektronisch gekoppelter Weise angesteuert werden.

Bei der abgewandelten Ausführungsform der Vorrichtung 1 zur kontinuierlichen gravimetrischen Dosierung gemäß Fig. 2 ist bei ansonsten ähnlichen Aufbau wie in Fig. 1 als Dosiereinrichtung 8 auch ein Fördergebläse für die Ausblasleitung 9 zur Dosierung und Weiterförderung vorgesehen. Der Antriebsmotor des nicht dargestellten Fördergebläses kann hierbei ebenfalls wieder mit der Dosiersteuerung 10 verbunden sein, so daß die Förderstärke variiert werden kann, indem z. B. die Drehzahl des Fördergebläses kurzzeitig erhöht oder abgesenkt wird.

Durch den gezielten "Rückstau" des Schüttgutes in dem stets vollständig gefüllten Zwischenbehälter 5, der auch wesentlich kleiner in Art eines Kompensators oder Balges ausgebildet sein kann, wird somit von der Zellenradschleuse 4 Schüttgut bewußt abgeschöpft und ständig rückgefördert, wobei dieses Schüttgut zur Eigenabdichtung der Zellenradschleuse 4 gegen Leckgasverluste dient.

## Patentansprüche

1. Verfahren zur kontinuierlichen Dosierung von Schüttgütern aus einem Behälter (2) mit einer Zellenradschleuse (4) und einer der Zellenradschleuse (4) nachgeschalteten Dosiereinrichtung (8),
**dadurch gekennzeichnet, daß**
die Austragsleistung der Dosiereinrichtung (8) relativ zur Förderstärke der vorgeschalteten Zellenradschleuse (4) auf einen geringeren Wert eingestellt wird, so daß an der Zellenradschleuse (4) eine Rückförderung zum Behälter (2) hin erfolgt.

2. Verfahren nach Anspruch 1,
**dadurch gekennzeichnet, daß**
die Einstellung bzw. Regelung unter Berücksichtigung des Füllstandes eines Zwischenbehälters (5) zwischen der Zellenradschleuse (4) und der Dosiereinrichtung (8) erfolgt.

3. Verfahren nach Anspruch 1 oder 2,
**dadurch gekennzeichnet, daß**
die Austragsregelung der Dosiereinrichtung (8) durch Änderung der Drehzahl der Dosiereinrichtung (8) erfolgt.

4. Verfahren nach Anspruch 1 oder 2,
**dadurch gekennzeichnet, daß**
die Austragsregelung der Dosiereinrichtung (8) bei pneumatischer Förderung durch Veränderung der Luftmenge und/oder Luftgeschwindigkeit erfolgt.

5. Vorrichtung zur kontinuierlichen Dosierung von Schüttgütern aus einem Behälter mit einer Zellenradschleuse und einer der Zellenradschleuse nachgeschalteten Dosiereinrichtung,
**dadurch gekennzeichnet, daß**
die Zellenradschleuse (4) mit der Dosiereinrichtung (8) über eine Dosiersteuerung (10) gekoppelt ist und der Massenstrom an der Zellenradschleuse (4) zur partiellen Rückförderung des Schüttgutes zum Behälter (2) hin größer als die Austragsleistung der Dosiereinrichtung (8) ist.

6. Vorrichtung nach Anspruch 5,
**dadurch gekennzeichnet, daß**
die Dosiereinrichtung (8) ebenfalls als Zellenradschleuse ausgebildet ist.

7. Vorrichtung nach Anspruch 5,
**dadurch gekennzeichnet, daß**
die Dosiereinrichtung (8) als Dosierrotorwaage (8') ausgebildet ist.

8. Vorrichtung nach Anspruch 5,
**dadurch gekennzeichnet, daß**
die Dosiereinrichtung (8) als Horizontalschleuse ausgebildet ist.

9. Vorrichtung nach einem der Ansprüche 5 bis 8,
**dadurch gekennzeichnet, daß**
die rückfördernden Zellen (7) der Zellenradschleuse (4) zu etwa 20 - 40% gefüllt sind.

## Claims

1. A method of continuous metering of bulk material from a container (2) with a rotary-vane feeder (4) and a metering device (8) following the rotary-vane feeder (4), **characterized in that** the discharge rate of the metering device (8) relative to the feed rate of the preceding rotary-vane feeder (4) is adjusted to a smaller value, so that return feed from the rotary-vane feeder (4) to the container (2) takes place.

2. A method according to claim 1, **characterized in that** the adjustment or regulation is effected taking into account the filling state of an intermediate container (5) between the rotary-vane feeder (4) and the metering device (8).

3. A method according to claim 1 or 2, **characterized in that** the discharge regulation of the metering device (8) is effected by altering the speed of rotation of the metering device (8).

4. A method according to claim 1 or 2, **characterized in that**, in the case of pneumatic feed, the discharge regulation of the metering device (8) is effected by altering the air amount and/or the air speed.

5. Apparatus for continuous metering of bulk material from a container with a rotary-vane feeder and a metering device following the rotary-vane feeder, **characterized in that** the rotary-vane feeder (4) is coupled to the metering device (8) via a metering controller (10) and the mass flow at the rotary-vane feeder (4) is greater then the discharge rate of the metering device (8) for partial return feed of the bulk material to the container (2).

6. Apparatus according to claim 5, **characterized in that** the metering device (8) is also formed as a rotary-vane feeder.

7. Apparatus according to claim 5, **characterized in that** the metering device (8) is formed as a metering rotor scale (8').

8. Apparatus according to claim 5, **characterized in that** the metering device (8) is formed as a horizontal lock.

9. Apparatus according to any of claims 5 to 8, **characterized in that** the return feed cells (7) of the rotary-vane feeder (4) are filled to around 20 - 40%.

## Revendications

1. Procédé de dosage continu de produits en vrac provenant d'un réservoir (2), avec une écluse à roues cellulaires (4) et un dispositif de dosage (8) placé en aval de l'écluse à roues cellulaires (4), **caractérisé en ce que** la puissance de décharge du dispositif de dosage (8) est réglée sur une plus petite valeur par rapport à la puissance de transport de l'écluse à roues cellulaires (4) placée en amont, de telle sorte qu'un retour de transport au réservoir (2) s'effectue au niveau de l'écluse à roues cellulaires (4).

2. Procédé selon la revendication 1, **caractérisé en ce que** l'ajustement ou la régulation s'opère en tenant compte du niveau de remplissage d'un réservoir intermédiaire (5) entre l'écluse à roues cellulaires (4) et le dispositif de dosage (8).

3. Procédé selon la revendication 1 ou 2, **caractérisé en ce que** la régulation de décharge du dispositif de dosage (8) s'effectue en modifiant la vitesse de rotation du dispositif de dosage (8).

4. Procédé selon la revendication 1 ou 2, **caractérisé en ce que** la régulation de décharge du dispositif de dosage (8), en cas de transport pneumatique, s'effectue en modifiant le volume d'air et/ou la vitesse de l'air.

5. Dispositif de dosage continu de produits en vrac provenant d'un réservoir, avec une écluse à roues cellulaires et un dispositif de dosage placé en aval de l'écluse à roues cellulaires, **caractérisé en ce que** l'écluse à roues cellulaires (4) est couplée au dispositif de dosage (8) par l'intermédiaire d'une commande de dosage (10) et **en ce que** le flux massique au niveau de l'écluse à roues cellulaires (4) pour ramener une partie du produit en vrac jusqu'au réservoir (2) est supérieur à la puissance de décharge du dispositif de dosage (8).

6. Dispositif selon la revendication 5, **caractérisé en ce que** le dispositif de dosage (8) est également conçu sous la forme d'une écluse à roues cellulaires.

7. Dispositif selon la revendication 5, **caractérisé en ce que** le dispositif de dosage (8) est conçu sous la forme d'une balance à rotor doseur (8').

8. Dispositif selon la revendication 5, **caractérisé en ce que** le dispositif de dosage (8) est conçu sous la forme d'une écluse horizontale.

9. Dispositif selon l'une des revendications 5 à 8, **caractérisé en ce que** les cellules (7) ramenant le produit en vrac de l'écluse à roues cellulaires (4) sont remplies à environ 20 - 40 %.
